(19) **Europäisches Patentamt**
**European Patent Office**
**Office européen des brevets**

(11) **EP 1 832 104 B1**

(12) **EUROPEAN PATENT SPECIFICATION**

(45) Date of publication and mention
of the grant of the patent:
**26.05.2010 Bulletin 2010/21**

(51) Int Cl.:
**_H04M 9/08_** _(2006.01)_

(21) Application number: **05821952.8**

(86) International application number:
**PCT/NO2005/000470**

(22) Date of filing: **21.12.2005**

(87) International publication number:
**WO 2006/071119 (06.07.2006 Gazette 2006/27)**

(54) **AUDIO SYSTEM AND METHOD FOR ACOUSTIC ECHO CANCELLATION**

AUDIOSYSTEM UND VERFAHREN ZUR AKUSTISCHEN ECHOLÖSCHUNG

SYSTEME ET PROCEDE AUDIO POUR L'ANNULATION D'ECHO ACOUSTIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.12.2004 NO 20045702**

(43) Date of publication of application:
**12.09.2007 Bulletin 2007/37**

(73) Proprietor: **Tandberg Telecom AS**
**1366 Lysaker (NO)**

(72) Inventor: **MARTON, Trygve, Frederik**
**N-0275 OSLO (NO)**

(74) Representative: **Onsagers Ltd**
**c/o Innovation Norway**
**5 Lower Regent Street**
**London SW1Y 4LR (GB)**

(56) References cited:
**US-A1- 2004 218 755     US-B1- 6 665 645**

EP 1 832 104 B1

**Description**

**Field of the invention**

The present invention relates to an audio communication system and method with improved acoustic characteristics, and particularly to a conferencing system including improved audio echo cancellation characteristics.

**Background of the invention**

In a conventional conferencing system, one or more microphones captures a sound wave at a far end site, and transforms the sound wave into a first audio signal. The first audio signal is transmitted to a near end side, where a television set or an amplifier and loudspeaker, reproduces the original sound wave by converting the first audio signal generated at the first site into the sound wave. The produced sound wave at the near end site, is captured partially by the audio capturing system at the near end site, converted to a second audio signal, and transmitted back to the system at the far end site. This problem of having a sound wave captured at one site, transmitted to another site, and then transmitted back to the initial site is referred to as acoustic echo. In its most severe manifestation, the acoustic echo might cause feedback sound, when the loop gain exceeds unity. The acoustic echo also causes the participants at both sites to hear themselves, making a conversation over the conferencing system difficult, particularly if there are delays in the system set-up, as is common in video conferencing systems. The acoustic echo problem is usually solved using an acoustic echo canceller, described below.

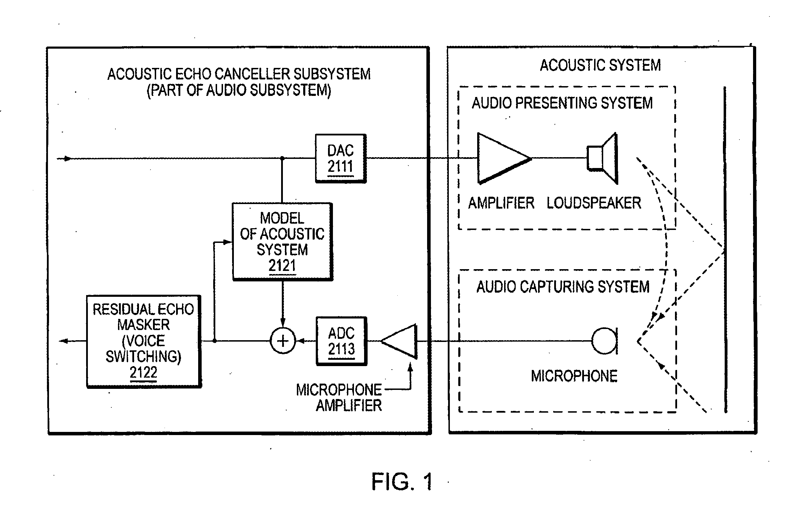

Fig. 1 shows an example of an acoustic echo canceller subsystem. At least one of the participant sites has the acoustic echo canceller subsystem in order to reduce the echo in the communication system. The acoustic echo canceller subsystem is a full band model of a digital acoustic echo canceller. A full band model processes a complete audio band (e.g., up to 20 kHz; for video conferencing the band is typically 7 kHz or higher, in audio conferencing the band is typically up to 3.4 kHz) of the audio signals directly.

As already mentioned, compensation of acoustic echo is normally achieved by an acoustic echo canceller. The acoustic echo canceller is a stand-alone device or an integrated part in the case of the communication system. The acoustic echo canceller transforms the acoustic signal transmitted from far end site to near end site, for example, using a linear/non-linear mathematical model and then subtracts the mathematically modulated acoustic signal from the acoustic signal transmitted from near end site to far end site. In more detail, referring for example to the acoustic echo canceller subsystem at the near end site in figure 1, the acoustic echo canceller passes the first acoustic signal from the far end site through the mathematical modeller of the acoustic system, calculates an estimate of the echo signal, subtracts the estimated echo signal from the second audio signal captured at near end site, and transmits back the second audio signal, less the estimated echo to far end site. The echo canceller subsystem of figure 1 also includes an estimation error, i.e., a difference between the estimated echo and the actual echo, to update or adapt the mathematical model to a background noise and changes of the environment, at a position where the sound is captured by the audio capturing device.

The model of the acoustic system used in most echo cancellers is a FIR (Finite Impulse Response) filter, approximating the transfer function of the direct sound and most of the reflections in the room. A full-band model of the acoustic system is relatively complex and processing power requiring, and alternatives to full-band models are normally preferred.

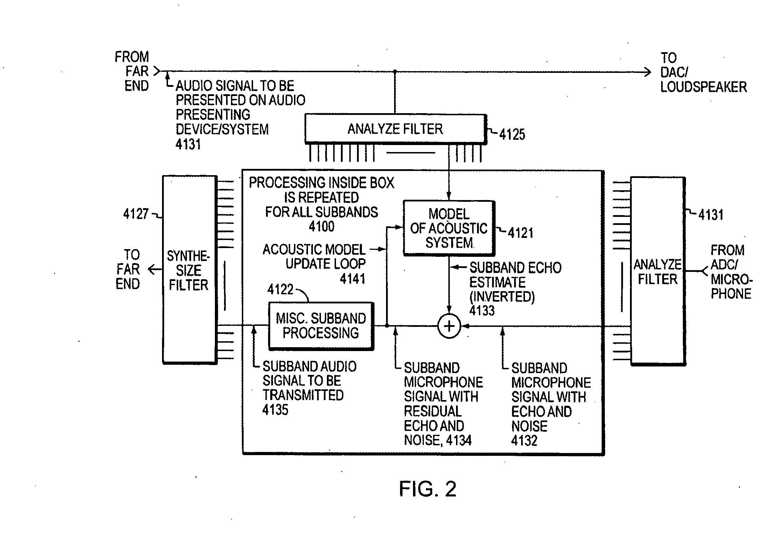

One way of reducing the processing power requirements of an echo canceller is to introduce sub-band processing, i.e. the signal is divided into bands with smaller bandwidth, which can be represented using, a lower sampling frequency. An example of such system is illustrated in fig. 2. The loudspeaker and microphone signals are divided by the analyze filter into sub bands, each representing a smaller range of frequencies of the original loudspeaker and microphones respectively. Similar echo cancelling and other processing are performed on each sub band, before all bands of the modified microphone are merged together to form the full band signal, by the synthesize filter.

The core component in an echo cancellator is the already mentioned acoustic model (most commonly implemented by a FIR filter). The acoustic model attempts to imitate the transfer function of the far end signal from the loudspeaker to the microphone. This adaptive model is updated by gradient search algorithm. The algorithm tries to minimize an error function, which is the power of the signal after the echo estimate is subtracted. For a mono echo canceller, this solution works, it is a uniform and unique solution.

However, in high quality communications, it is often desirable to transmit and present high quality multi channel audio, e.g. stereo audio. Stereo audio includes audio signals from two separate channels representing different spatial audio from a certain sound composition. Loading the channels on each respective loudspeaker creates a more faithful audio reproduction, as the listeners will perceive a spatial difference between the audio sources from which the sound composition is created.

The signal that is played on one loudspeaker differs from the signal presented on the other loudspeaker(s).

Thus, for a stereo (or multi channel) echo canceller, the transfer function from each respective speaker to the microphone needs to be compensated for. This is a somewhat different situation compared to mono audio echo cancellation, as there are two different, but correlated signals to compensate for.

Note that transmission of stereo signals, by using several microphones, does not require stereo echo cancelling if only one loudspeaker (or mono presentation signal) is present. If multi channel audio should be recorded, the algorithms (both in prior art and in the invention) can be duplicated, and sometimes simplified (because many parts are common to all microphones). The duplication is straightforward, also in the case of stereo or multichannel reception of signals, and this document does not discuss the usage of more microphones in detail.

In stereo audio, the correlation in the different channels tends to be significant. This causes the normal gradient search algorithms to suffer. Mathematically expressed, the correlation introduces several false minimum solutions to the error function. This is i.a. described in Steven L. Gat and Jacob Benesty *"Acoustic signal processing for telecommunication"*, Boston: Kluwer Academic Publishers, 2000. The fundamental problem is that when multiple channels carry linearly related signals, the solution of the normal function corresponding to the error function solved by the adaptive algorithm is singular. This implies that there is no unique solution to the equation, but an infinite number of solutions, and it can be shown that all but the true one depend on the impulse responses of the transmission room (in this context, the transmission room may also include a synthesized transmission room as e.g. recorded or programmed material played back at the far-end side). The gradient search algorithm may then be trapped in a minimum that not necessarily is the true minimum solution.

Another common way of expressing this stereo echo canceller adaptation problem is that it is difficult to distinguish between a room response change and an audio "movement" in the stereo image. For example, the acoustic model has to reconverge if one talker starts speaking at a different location at the far end side. There is no adaptive algorithm that can track such a change sufficiently fast, and a mono echo canceller in the multi-channel case does not result in satisfactory performance.

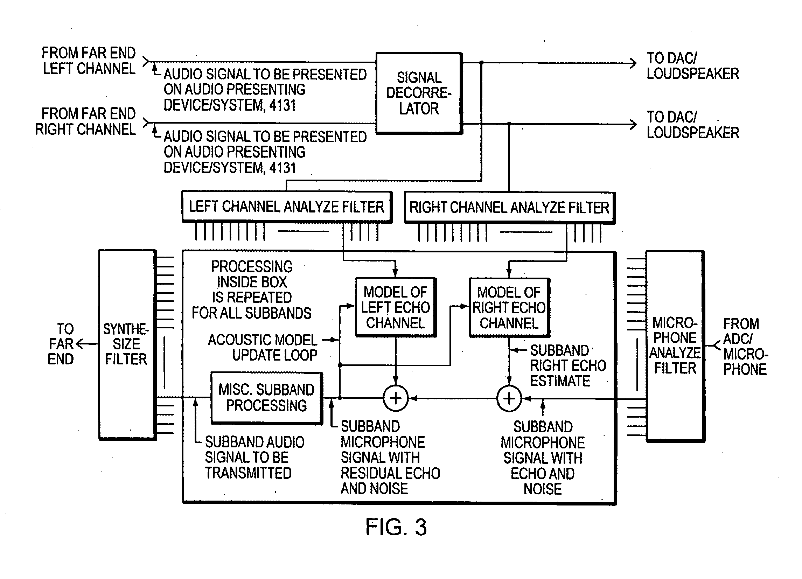

A typical approach for overcoming the above-mentioned false minimum solutions problem mentioned above is shown in figure 3. Compared to the mono case, the analyze filter is duplicated, dividing both the right and left loudspeaker signal into sub bands. The acoustic model is divided into two models (per sub band), one for the right channel transfer function and one for the left channel transfer function.

To overcome the false minimum solutions introduced by the correlation between the left and right channel signals, a de-correlation algorithm is introduced. This de-correlation makes it possible to correctly update the acoustic models. However, the de-correlation technique also modifies the signals that are presented on the loudspeakers. While quality preserving modification techniques could be acceptable, most de-correlation techniques according to prior art severely distort the audio. In addition, computationally inexpensive adaptive algorithms like the LMS (least mean square) or NLMS (normalized least mean square) tend to converge slow for stereo signals decorrelated using prior art. Therefore, prior art solution most commonly uses more computationally expensive algorithms, for example the RLS (recursive least square).

"Stereophonic acoustic echo cancellation using nonlinear transformation and comb filtering" Jacob Benesty et al, Bell Laboratories, Lucent Technology, describes a stereo receiving audio system partly using comb filtering on stereo input signals to de-correlate the channels allowing rapidly converging adaptive algorithms in the echo canceller module. However, due to the required complexity, it is still to computationally expensive.

Prior art techniques may solve the stereo echo problem, but it does not preserve the necessary quality of the audio, and in addition, the techniques are computationally intensive, due to the duplication of echo path estimation and other sub functions, and due to the more complex adaptive algorithms necessary.

## Summary of the invention

It is an object of the present invention to provide a system and method minimizing audio echo when stereo is present.

In particular, the present invention discloses an audio system according to claim 1 and an audio system according to claim 7.

Methods corresponding to the audio systems are also disclosed.

## Brief description of the drawings

In order to make the invention more readily understandable, the discussion that follows will refer to the accompanying drawings,

Figure 1 is a detailed block diagram of a conventional conferencing system set-up,

Figure 2 is a block diagram of the corresponding echo canceller subsystem implemented with sub-band processing,

Figure 3 is a block diagram of a stereo echo canceller system according to prior art,

Figure 4 is a block diagram of a general embodiment of the present invention,

Figure 5 is a is a block diagram of a first preferred embodiment of the present invention,

Figure 6 illustrates the frequency response of filters used in the first and the second preferred embodiment of the present invention,

Figure 7 is a is a block diagram of a second preferred embodiment of the present invention,

Figure 8 is a is a block diagram of a third preferred embodiment of the present invention,

## Best mode of carrying out the invention

In the following, the present invention will be discussed by describing preferred embodiments, and by referring to the accompanying drawings. However, even if the specific embodiments are described in connection with video conferencing and stereo sound, people skilled in the art will realize other applications and modifications within the scope of the invention as defined in the enclosed independent claims.

In particular, the present invention discloses a system and a method for modifying the loudspeaker signal for allowing improved echo cancellation of the audio signal captured by the microphone without deteriorate the perceptual stereo (or multi channel) sound. The basic idea is to merge the signals from the different channels into a mono characteristic signal, still keeping sufficient spatial information to provide perceptual multi channel sound on the loud speaker.

Both a generalized version for the multi channel case (including stereo) and preferred embodiments for the stereo embodiment introduces considerably less perceptual distortion to the audio signal than the de correlation algorithms according to prior art. It preserves the subjective stereo image, but still, using this invention, it is possible to cancel the echo using a mono echo canceller, and obtaining a adequately high convergence speed using a computationally efficient LMS algorithm (more expensive and faster algorithms like APA and RLS can also be used, increasing the convergence speed). Therefore, compared to prior art, the invention also reduces complexity cost of the echo cancelling system, as the two path estimations in a stereo echo canceller can be replaced with one, usually less expensive single path estimator.

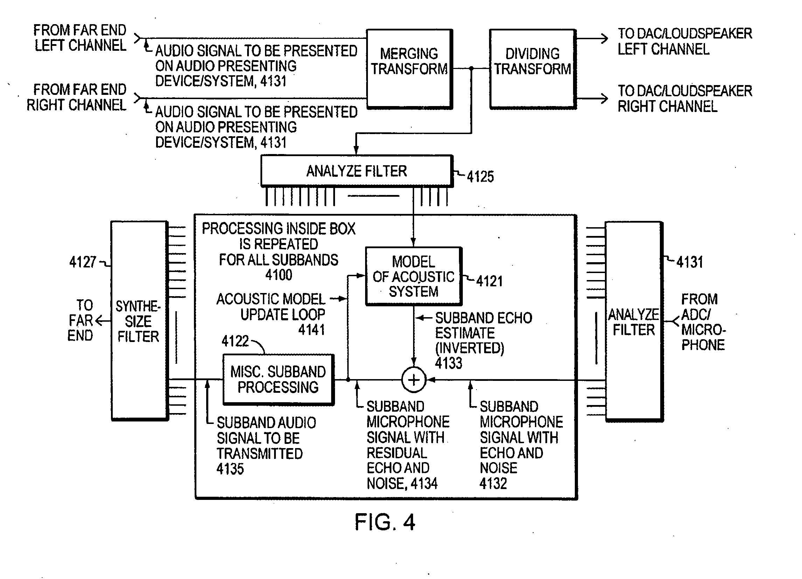

Figure 4 shows a system illustrating the present invention in the general case. All (the left and right for stereo case) loudspeaker signals are passed through a merging transform, combining the signals to one single mono signal. This single combined signal is used as the reference signal for a mono echo canceller.

The merging transform can be designed in various ways, and both non-linear and time variant techniques may be used, if desirable. The important is that one single reference signal is made for the echo canceller, and that spatial audio information is preserved.

Further, before presenting the signals on the loudspeaker, the combined signal is divided into one signal for each loudspeaker by a dividing transform. For a stereo case, the signal is divided into a left and a right channel.

The dividing transform constitutes a part of the echo response part that needs to be modelled. Therefore, care should be taken not to make a transform complicating the modelling. Standard echo cancellers usually estimates the echo response path using a linear model, therefore, a linear dividing transform is preferred. Echo cancellers also have to track any changes in the echo response path. This tracking is relatively slow, motivating the use of a time invariant dividing transform.

The merging and dividing transform must be configured to create a set of audio signal with the spatial information preserved, ensuring that they together limits the audible artifacts of the transformation.

From the echo cancellers point of view, when obtaining only one reference signal completely representing the load speaker signal, the signal is mono, even though the signal is divided and played on several loudspeakers. Therefore, by a proper selection of the merging and dividing transform, a signal with subjectively spatial information can be processed by a mono echo canceller.

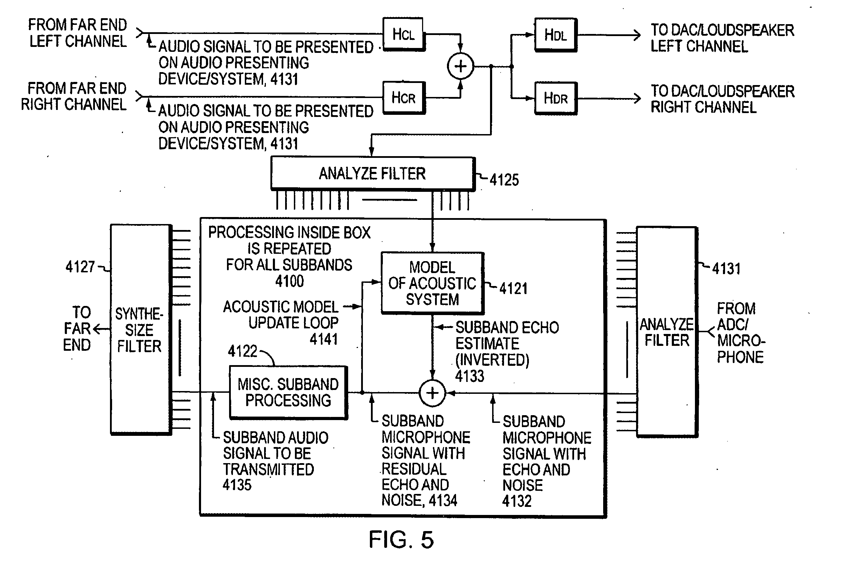

In figure 5, a general case of a preferred embodiment of a stereo (two channel) case is shown. The merging transform is formed by two linear filters $H_{CL}$ and $H_{CR}$, one for each channel, and an adder. The dividing transform is formed by another two linear filters $H_{DL}$ and $H_{DR}$.

One set of filters preserving the spatial information only introducing limited perceptual degradation of the audio quality is the two complementary comb filters $H_{CL}$ and $H_{CR}$:

$$H_{CL}(f) = K_C \text{ for } f \in [f_{2n}, f_{2n+1}>, 0 \text{ otherwise,}$$

and

$$H_{CR}(f) = K_C \text{ for } f \in [f_{2n+1}, f_{2n+2}>, 0 \text{ otherwise,}$$

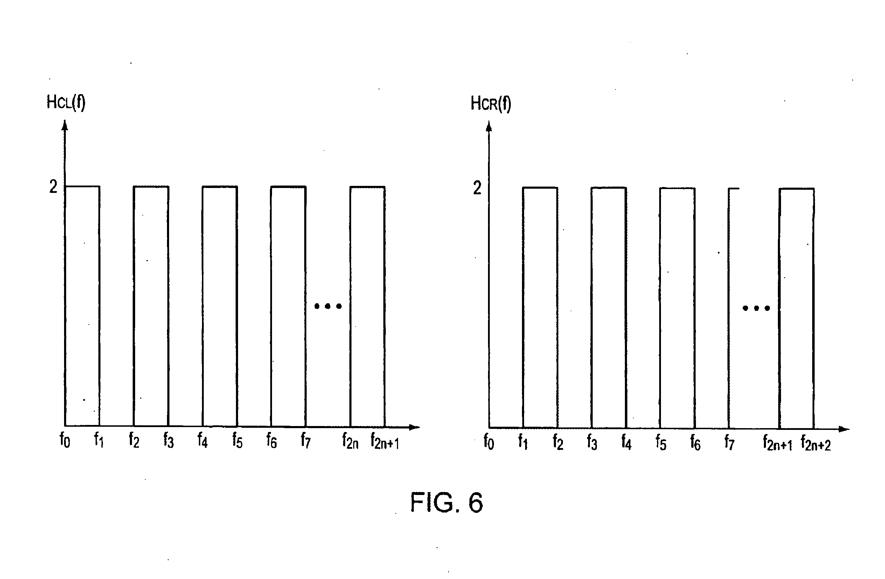

Where $n = 0, 1, 2 \ldots$ and $f_n$ are a freely selected set of frequencies. $K_C$ is a gain to compensate for the loss introduced by the comb filtering. The frequency response two filters are illustrated in figure 6. Note that these are ideal filters, which practically are hard to achieve. However, it is possible to configure the filters to be to be complementary, even if they are not individually ideal.

The dividing transform has similar filters:

$$H_{DL}(f) = K_D \text{ for } f \in [f_{2n}, f_{2n+1}>, 0 \text{ otherwise,}$$

and

$$H_{DR}(f) = K_D \text{ for } f \in [f_{2n+1}, f_{2n+2}>, 0 \text{ otherwise,}$$

for the same set of frequencies $f_n$ as for the merging transform. $K_D$ is a gain to compensate for the loss introduced by the comb filtering. Usually, to maintain the energy through the system, $K_C * K_D$ is usually selected to equal 2.

The merging filter removes half the frequency content in each channel to make the signals mergeable to a mono signal by an adder, which is provided as the reference signal for the echo canceller. The merged signal is then divided again by means of a dividing filter with respective frequency response corresponding to the merging filters, and the resulting left and right signal is loaded on the left and right loudspeaker.

The physical interpretation of the above formulas is that some frequency bands are played on the left loudspeaker, whereas the remaining frequency bands are played on the right loudspeaker. By making the frequency bands adequately narrow, the overall perception of audio quality and spatial information is good using naturally generated audio signals, which do not contain to many pure single tones. This is due to the properties of the ear. In addition, when played on a loud speaking system, the left and right channels will add almost completely before approaching the ears. Thus, the mono part (the sum of right and left channel) will be mixed back acoustically and therefore it will be very little degraded perceptually. The side part (the difference between the left and right channel) will be more affected, but still, experience has shown that the perception of spatiality is hardly reduced.

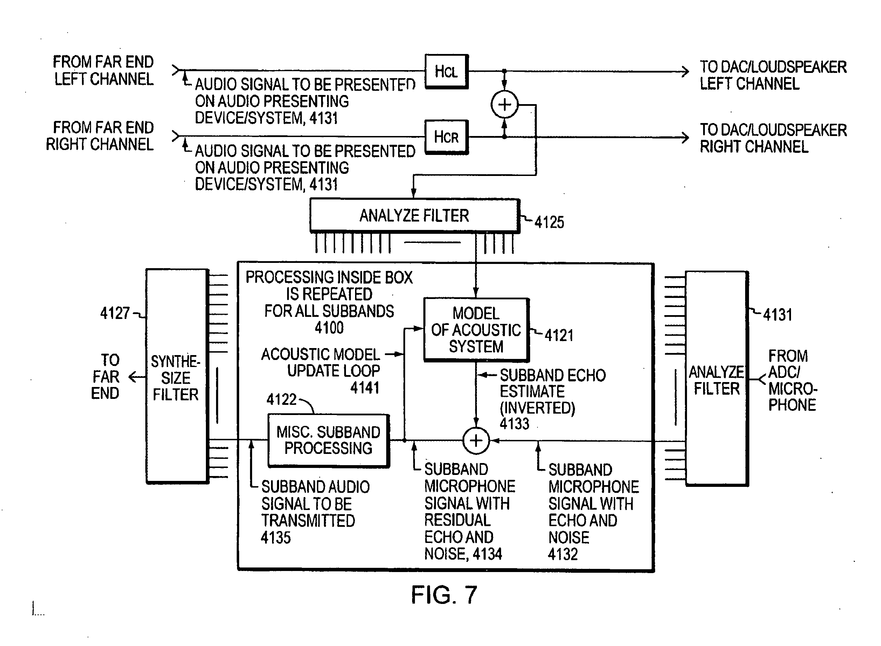

As already mentioned, it is hard to provide ideal filters as shown in figure 6, but if they are kept pretty close to ideal, the dividing filters can be omitted, and the systems complexity can be reduced to the one illustrated in figure 7. This deviates from the original structure presented, but it will still work, due to the complementary filters ensuring the cross paths to be zero gain, i.e. $H_{CL}(f) * H_{DR}(f) = 0$ and $H_{CR}(f) * H_{LL}(f) = 0$ at all frequencies. Of course, when omitting the dividing filters, the gain $K_D$ must be incorporated either in the merging filters or as a gain somewhere else in the system.

Practical implementations as the one described above will use equally broad frequency bands to avoid the need of a number of different filters (uniform filters) as many filter banks, including those used in most sub band echo cancellers, do have bands with identical bandwidth. However, the required frequency width of each "tooth" of the comb filters is actually frequency dependent. Low frequencies require more narrow "teeth" than high frequencies, and to comply with this criterion in a uniform comb filter, an impractically high number of "teeth" will be required. However, most often, very limited spatial information is present in the lower frequencies. Therefore, it may be advantageous to play the mono (i.e. sum signal) in all (both) channels at low frequencies, that is:

$$H_{CL}(f) = K_{MC} \text{ for } f \in [0, f_1>, \ K_C \text{ for } f \in [f_{2n+2}, f_{2n+3}>, \ 0$$
otherwise, and

$$H_{CR}(f) = K_{MC} \text{ for } f \in [0, f_1>, \ K_C \text{ for } f \in [f_{2n+1}, f_{2n+2}>, \ 0$$
otherwise,

$$H_{DL}(f) = K_{MD} \text{ for } f \in [0, f_1>, \ K_D \text{ for } f \in [f_{2n+2}, f_{2n+3}>, \ 0$$
otherwise, and

$$H_{DR}(f) = K_{MD} \text{ for } f \in [0, f_1>, \ K_D \text{ for } f \in [f_{2n+1}, f_{2n+2}>, \ 0$$
otherwise,

where n = 0, 1, 2, 3, ... and $f_n$ are a freely selected set of frequencies. $K_C$ and $K_D$ are gains to compensate for the loss introduced by the comb filtering. $K_C * K_D$ usually equals 2 to maintain the gain through the system. $K_{MC}$ and $K_{MD}$ are gains selected to maintain the mono signal level, and $K_{MC} * K_{MD}$ is usually selected as unity. The physical interpretation of this is that the low frequency part played on the loudspeakers are full band mono signals, while at higher frequencies, the left and right signals are filtered by complementary comb filters.

The comb filters described above are especially suitable when used together with a sub band echo canceller. As the analyze filters are constructed to divide a full band signal into frequency bands and the synthesize filters are designed to merge the sub bands back into a full band signal, the sub band canceller already has incorporated most of the processing blocks needed for implementing the comb filter structure.

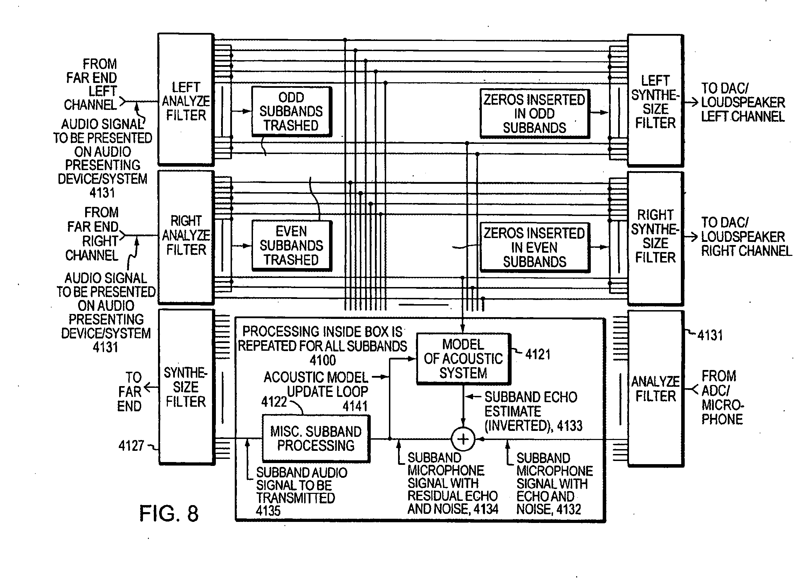

This is utilised in a preferred embodiment of the present invention, illustrated in figure 8. The left and right channel are individually divided into frequency bands representation $L_i$ and $R_i$ using two instances of the analyze filter. The two signals are then combined to a single reference signal $C_i$ in the sub band domain:

$$C_i = K_{CL,i} * L_i + K_{CR,i} * R_i$$

where $K_{CL,i}$ and $K_{CR,i}$ are weighting factors for left and right channel, respectively, and the letter i denotes the sub band number. The signal C is used as the input to the echo canceller as the loudspeaker reference signal.

Before playing the output signals, the reference signal is further divided into new left and right channel signals, $L_i'$ and $R_i'$ respectively:

$$L_i' = K_{DL,i} * C_i$$

$$R_i' = K_{DR,i} * C_i$$

Finally, these modified signals are processed through synthesize filters to make full band versions of the same. This process adds some delay, and as this delay is part of the echo path, it may be advantageous to delay the reference

6

signal correspondingly, to avoid estimating non-causal filter taps in the response.

For a standard comb filtering structure, $K_{CL,i}*K_{DL,i}$ are selected to equal 2 for i odd, and zero for i even, whereas $K_{CR,i}*K_{DR,i}$ are selected to 0 for i odd, and 2 for i even. Combining the lower frequency bands to a mono signal, as suggested above, is also easily realizable, as is also any other thinkable combination. The merging and dividing constants can be chosen freely without worrying about the echo cancellers performance, as the analyzing and synthesizing filter bank already incorporates adequately steep frequency band transitions. The merging constants may be time variant and/or non linear, if requested, whereas the dividing constants, constituting part of the path to be modelled, better are kept linear and time invariant.

As for the more general approach, if $K_{CL,i}*K_{DR,I} = 0$ and $K_{CR,i}*K_{DL,I} = 0$ for all i, the merging and dividing process can be replaced by simple copying/signal routing. A sub band canceller modified for implementing the merging and dividing filter structure as this are also shown in figure 8. The scaling factors compensating for the lost energy when clearing every other sub band, should be incorporated in the left/right analyze/synthesize filters, or somewhere else in the system. The figure shows the case where all even bands are extracted and used for the left channel and all odd bands from the right channel. Of course, the opposite will work just as well.

Except for the merging and dividing processes, which are both simple vector multiplications and additions, no new building blocks are added to a standard mono sub band echo canceller as using this structure, making the technique easy to implement.

Compared to realizations of stereo cancellers using de correlation techniques, two new synthesize filters must be added. However, due to one single reference vector, only one set of echo path models must be implemented. The processing power required for two synthesize filters is normally small compared to the processing power required for an additional echo path model set, thus, the processing power requirements for this approach is considerable smaller than for standard stereo echo cancellers. The audible artifacts are less noticeable than known de correlation techniques. The extra delay introduced in the loudspeaker signal path may be disadvantageous in some applications, whereas it in other applications (e.q. video conferencing, where the audio signal are delayed to achieve synchronization between audio and video) is uncritical.

One of the main advantages of the present invention is that it allows for handling a stereo audio signal with a mono echo canceller, with only minor changes to the canceller. Thus, the technique is fast to implement. It also utilizes building blocks in standard sub band cancellers.

Further, the present invention provides for considerable lower processing power demands than standard stereo echo cancellers, and it adds less audible degradation to the audio signal than stereo echo cancellers using known de correlation techniques.

## Claims

1. A multi-channel audio system at a near-end conference party, said multi-channel audio system being configured to receive a multi-channel audio signal from a far-end conference party, said multi-channel audio signal comprising a plurality N of channel audio signals, one for each channel of the audio system, to present corresponding audio on N loudspeakers, to capture near-end audio by one or more microphones and to transmit corresponding near-end audio signal to the far-end conference party, said audio system being **characterized in** a merging unit for merging the multi-channel audio signal into a mono signal preserving spatial audio information by filtering each channel audio signal with a corresponding filter from a first set of N frequency complementary filters, thereby generating N filtered channel audio signals, and by adding the N filtered channel audio signals for creating said mono signal, and a pre-load unit either for dividing said mono signal by filtering said mono signal with each of a second set of N frequency complementary filters having frequency responses corresponding to the frequency responses of the filters of said first set of N frequency complementary filters, thereby generating N loudspeaker signals, and for providing each loudspeaker signal to a corresponding loudspeaker, or, alternatively, simply for providing each filtered audio channel signal to a corresponding loudspeaker, and a mono echo canceller comprising means for generating an echo model signal from said mono signal used as reference signal and means for subtracting said echo model signal from the near-end audio signal, thereby generating an echo-cancelled signal for transmission to the far-end conference party.

2. An audio system according to claim 1, wherein said frequency complementary filters are filters with comb filter frequency responses.

**3.** An audio system according to claim 1, wherein
the means for generating an echo model signal from said mono signal used as reference signal comprises a first analyse filter for dividing said mono signal into a number M of sub-band mono signals, and means for generating M sub-band echo model signals from said M sub-band mono signals, and
the means for subtracting said echo model signal from the near-end audio signal, thereby generating an echo-cancelled signal for transmission to the far-end conference party, comprises
a second analyse filter for dividing the near-end audio signal into M sub-band near-end audio signals, and means for subtracting each sub-band echo model signal from a corresponding sub-band near-end audio signal, thereby generating M sub-band echo-cancelled signals, and a first synthesis filter for merging said M sub-band echo-cancelled signals into said echo-cancelled signal for transmission to the far-end conference party.

**4.** An audio system according to one of the claims 1-3, wherein said preload unit concurs with said frequency complementary filters.

**5.** An audio system according to one of the preceding claims, wherein
the multi-channel audio signal is a stereo audio signal comprising left (L) channel audio signal and a right (R) channel audio signal.

**6.** An audio system according to claim 5, wherein a first one of said frequency complementary filters associated with said left channel has a frequency response according to the following characteristics:

$$H_L(f) = K_C \text{ for } f \in [f_{2n}, f_{2n+1}>, 0 \text{ otherwise},$$

and a second one of said frequency complementary filters associated with said right channel has a frequency response according to the following characteristics:

$$H_R(f) = K_C \text{ for } f \in [f_{2n+1}, f_{2n+2}>, 0 \text{ otherwise}.$$

**7.** An audio system at a near-end conference party, said audio system being configured to
receive a stereo audio signal from a far-end conference party, said stereo audio signal comprising a left-channel audio signal and a right-channel audio signal,
to present corresponding audio on a left and a right loudspeakers respectively,
to capture near-end audio by one or more microphones, and to transmit corresponding near-end audio signal to the far-end conference party,
said audio system being **characterized in**
a left analyse filter for dividing said left-channel audio signal into a number M of left sub-band frequency outputs comprising even and odd left sub-band frequency outputs, and
a right analyse filter for dividing said right-channel audio signal into M right sub-band frequency outputs comprising even and odd right sub-band frequency outputs, and
a left synthesize filter for merging the even left sub-band frequency outputs into a left-channel merged signal and for providing said left-channel merged signal to said left loudspeaker, and
a right synthesize filter for merging the odd right sub-band frequency outputs into a right-channel merged signal and for providing said right-channel merged signal to said right loudspeaker, and
means for generating M sub-band echo model signals from M sub-band mono signals comprising even and odd sub-band mono signals so that the even sub-band mono signals are the even left sub-band frequency outputs and the odd sub-band mono signals are the odd right sub-band frequency outputs, and
a second analyse filter for dividing the near-end audio signal into M sub-band near-end audio signals, and
means for subtracting each sub-band echo model signal from a corresponding sub-band near-end audio signal, thereby generating M sub-band echo-cancelled signals, and
a second synthesis filter for merging said M sub-band echo-cancelled signals into an echo-cancelled signal, for transmission to the far-end conference party.

**8.** A method in an audio system at a near-end conference party, said audio system receiving a multi-channel audio signal from a far-end conference party, said multi-channel audio signal comprising a plurality N of channel audio signals, one for each channel of the audio system, presenting corresponding audio on N loudspeakers, capturing near-end audio by one or more microphones and transmitting corresponding near-end audio signal to the far-end conference party,

said method being **characterized in**

merging the multi-channel audio signal into a mono signal preserving spatial audio information by filtering each channel audio signal with a corresponding filter from a first set of N frequency complementary filters, thereby generating N filtered channel audio signals, and by adding the N filtered channel audio signals for creating said mono signal, and

either dividing said mono signal by filtering said mono signal with each of a second set of N frequency complementary filters having frequency responses corresponding to the frequency responses of the filters of said first set of N frequency complementary filters, thereby generating N loudspeaker signals, and by providing each loudspeaker signal to a corresponding loudspeaker, or, alternatively, simply providing each filtered audio channel signal to a corresponding loudspeaker, and

providing said mono signal as reference signal to a mono echo canceller, said mono echo canceller generating an echo model signal from said mono signal, subtracting said echo model signal from the near-end audio signal, thereby generating an echo-cancelled signal for transmission to the far-end conference party.

9. A method according to claims 8, wherein said frequency complementary filters are filters with comb filter frequency responses.

10. A method according to claim 8,
wherein the step of generating an echo model signal from said mono signal comprises dividing said mono signal into a number M of sub-band mono signals by means of a first analyse filter, and generating M sub-band echo model signals from said M sub-band mono signals, and

wherein the step of subtracting said echo model signal from the near-end audio signal, thereby generating an echo-cancelled signal for transmission to the far-end conference party, comprises the steps of

dividing the near-end audio signal into M sub-band near-end audio signals by means of a second analyse filter, and subtracting each sub-band echo model signal from a corresponding sub-band near-end audio signal, thereby generating M sub-band echo-cancelled signals, and merging said M sub-band echo-cancelled signals into said echo-cancelled signal by means of a first synthesis filter, for transmission to the far-end conference party.

11. A method according to one of the claims 8-10, **characterized in that** the multi-channel audio signal is a stereo audio signal comprising a left (L) channel audio signal and a right (R) channel audio signal.

12. A method according to claim 11, wherein
a first one of said frequency complementary filters associated with said left channel has a frequency response according to the following characteristics:

$$H_L(f) = K_C \text{ for } f \in [f_{2n}, f_{2n+1}>, 0 \text{ otherwise,}$$

and a second one of said frequency complementary filters associated with said right channel has a frequency response according to the following characteristics:

$$H_R(f) = K_C \text{ for } f \in [f_{2n+1}, f_{2n+2}>, 0 \text{ otherwise.}$$

13. A method in an audio system at a near-end conference party, said audio system receiving a stereo audio signal from a far-end conference party, said stereo audio signal comprising a left-channel audio signal and a right-channel audio signal, presenting corresponding audio on a left and a right loudspeakers respectively, capturing near-end audio by one or more microphones and transmitting corresponding near-end audio signal to the far-end conference party,

the method being **characterized in**

dividing said left-channel audio signal by means of a left analyse filter into a number M of left sub-band frequency outputs comprising even and odd left sub-band frequency outputs, and dividing said right-channel audio signal by means of a right analyse filter into M right sub-band frequency outputs comprising even and odd right sub-band frequency outputs, and

merging the even left sub-band frequency outputs by means of a left synthesize filter, thereby generating a left-channel merged signal, and merging the odd right sub-band frequency outputs by means of a right synthesize filter, thereby generating a right-channel merged signal, and providing said left-channel merged signal to said left loudspeaker and said right-channel merged signal to said right loudspeaker, and

generating M sub-band mono signals comprising even and odd sub-band mono signals so that the even sub-band mono signals are the even left sub-band frequency outputs and the odd sub-band mono signals are the odd right sub-band frequency outputs, and

generating M sub-band echo model signals from said M sub-band mono signals, and dividing the near-end audio signal into M sub-band near-end audio signals by means of a second analyse filter, and subtracting each sub-band echo model signal from a corresponding sub-band near-end audio signal, thereby generating M sub-band echo-cancelled signals, and merging said M sub-band echo-cancelled signals into an echo-cancelled signal by means of a second synthesis filter, for transmission to the far-end conference party.

## Patentansprüche

1. Mehrkanal-Audiosystem bei einem nahen Konferenzteilnehmer, wobei das Mehrkanal-Audiosystem dafür konfiguriert ist,

   - ein Mehrkanal-Audiosignal von einem fernen Konferenzteilnehmer zu empfangen, wobei das Mehrkanal-Audiosignal eine Vielzahl N von Kanal-Audiosignalen aufweist, und zwar eines pro Kanal des Audiosystems,
   - ein entsprechendes Audiosignal an N Lautsprechern zu präsentieren,
   - ein Nah-Audiosignal mit einem oder mehreren Mikrophonen aufzunehmen und
   - ein entsprechendes Nah-Audiosignal zu dem fernen Konferenzteilnehmer zu übertragen,
   wobei das Audiosystem **gekennzeichnet ist durch**
   - eine Zusammenführungseinheit zum Zusammenführen des Mehrkanal-Audiosignals in ein Monosignal unter Bewahrung von räumlicher Audioinformation **durch** Filtern eines jeweiligen Kanal-Audiosignals mit einem entsprechenden Filter von einem ersten Satz von N frequenz-komplementären Filtern, um **dadurch** N gefilterte Kanal-Audiosignale zu generieren, sowie **durch** Addieren der N gefilterten Kanal-Audiosignale zum Erzeugen des Monosignals, und
   - eine Vorspanneinheit entweder zum Unterteilen des Monosignals **durch** Filtern des Monosignals mit jedem von einem zweiten Satz von N frequenz-komplementären Filtern mit Frequenzgängen entsprechend den Frequenzgängen der Filter des ersten Satzes von N frequenz-komplementären Filtern, um **dadurch** N Lautsprechersignale zu erzeugen, und zum Bereitstellen jedes Lautsprechersignals an einem entsprechenden Lautsprecher oder alternativ einfach zum Bereitstellen jedes gefilterten Audiokanalsignals an einem entsprechenden Lautsprecher, und
   - einen Mono-Echounterdrücker mit einer Einrichtung zum Generieren eines Echo-Modellsignals aus dem Monosignal, das als Referenzsignal verwendet wird, und eine Einrichtung zum Subtrahieren des Echo-Modellsignals von dem Nah-Audiosignal, um **dadurch** ein echounterdrücktes Signal zur Übertragung zu dem fernen Konferenzteilnehmer zu generieren.

2. Audiosystem nach Anspruch 1,
   wobei es sich bei den frequenz-komplementären Filtern um Filter mit Kammfilter-Frequenzgängen handelt.

3. Audiosystem nach Anspruch 1,
   wobei die Einrichtung zum Generieren eines Echo-Modellsignals aus dem als Referenzsignal verwendeten Monosignal ein erstes Analysefilter zum Unterteilen des Monosignals in eine Anzahl M von Unterband-Monosignalen sowie eine Einrichtung zum Generieren von M Unterband-Echo-Modellsignalen aus den M Unterband-Monosignalen aufweist, und wobei die Einrichtung zum Subtrahieren des Echo-Modellsignals von dem Nah-Audiosignal, um **dadurch** ein echounterdrücktes Signal zur Übertragung zu dem fernen Konferenzteilnehmer zu generieren, folgendes aufweist:

   - ein zweites Analysefilter zum Unterteilen des Nah-Audiosignals in M Unterband-Nah-Audiosignale, und
   - eine Einrichtung zum Subtrahieren des jeweiligen Unterband-Echo-Modellsignals von einem entsprechenden Unterband-Nah-Audiosignal, um **dadurch** M echounterdrückte Unterband-Signale zu generieren, sowie
   - ein erstes Synthesefilter zum Zusammenführen der M echounterdrückten Unterband-Signale in das echounterdrückte Signal zur Übertragung zu dem fernen Konferenzteilnehmer.

4. Audiosystem nach einem der Ansprüche 1 bis 3,
wobei die Vorspanneinheit mit den frequenz-komplementären Filtern übereinstimmt.

5. Audiosystem nach einem der vorhergehenden Ansprüche,
wobei es sich bei dem Mehrkanal-Audiosignal um ein Stereo-Audiosignal mit einem linken (L) Kanal-Audiosignal und einem rechten (R) Kanal-Audiosignal handelt.

6. Audiosystem nach Anspruch 5,
wobei ein dem linken Kanal zugeordnetes, erstes Filter der frequenz-komplementären Filter einen Frequenzgang gemäß folgender Charakteristik aufweist:

$$H_L(f) = K_c \text{ für } f \in [f_{2n}, f_{2n+1}>, \qquad \text{sonst } 0,$$

und wobei ein dem rechten Kanal zugeordnetes, zweites Filter der frequenz-komplementären Filter einen Frequenzgang gemäß folgender Charakteristik aufweist:

$$H_R(f) = K_c \text{ für } f \in [f_{2n+1}, f_{2n+2}>, \qquad \text{sonst } 0.$$

7. Audiosystem bei einem nahen Konferenzteilnehmer, wobei das Audiosystem dafür konfiguriert ist,

- ein Stereo-Audiosignal von einem fernen Konferenzteilnehmer zu empfangen, wobei das Stereo-Audiosignal ein Audiosignal eines linken Kanals und ein Audiosignal eines rechten Kanals aufweist,
- ein entsprechendes Audiosignal an einem linken bzw. einem rechten Lautsprecher zu präsentieren,
- ein Nah-Audiosignal mit einem oder mehreren Mikrophonen aufzunehmen und
- ein entsprechendes Nah-Audiosignal zu dem fernen Konferenzteilnehmer zu übertragen,
wobei das Audiosystem **gekennzeichnet ist durch**
- ein linkes Analysefilter zum Unterteilen des Audiosignals des linken Kanals in eine Anzahl M von linken Unterband-Frequenzausgängen, die gerade und ungerade linke Unterband-Frequenzausgänge beinhalten,
- ein rechtes Analysefilter zum Unterteilen des Audiosignals des rechten Kanals in eine Anzahl M von rechten Unterband-Frequenzausgängen, die gerade und ungerade rechte Untergang-Frequenzausgänge beinhalten,
- ein linkes Synthesefilter zum Zusammenführen der geraden linken Unterband-Frequenzausgänge in ein zusammengeführtes Signal des linken Kanals und zum Bereitstellen des zusammengeführten Signals des linken Kanals an dem linken Lautsprecher, und
- ein rechtes Synthesefilter zum Zusammenführen der ungeraden rechten Unterband-Frequenzausgänge in ein zusammengeführtes Signal des rechten Kanals und zum Bereitstellen des zusammengeführten Signals des rechten Kanals an dem rechten Lautsprecher, und
- eine Einrichtung zum Generieren von M Unterband-Echo-Modellsignalen aus M Unterband-Monosignalen, die gerade und ungerade Unterband-Monosignale aufweisen, so daß die geraden Unterband-Monosignale die geraden linken Unterband-Frequenzausgänge bilden und die ungeraden Unterband-Monosignale die ungeraden rechten Unterband-Frequenzausgänge bilden, und
- ein zweites Analysefilter zum Unterteilen des Nah-Audiosignals in M Unterband-Nah-Audiosignale, und
- eine Einrichtung zum Subtrahieren jedes Unterband-Echo-Modellsignals von einem entsprechenden Unterband-Nah-Audiosignal, um **dadurch** M echounterdrückte Unterband-Signale zu generieren, und
- ein zweites Synthesefilter zum Zusammenführen der M echounterdrückten Unterband-Signale in ein echounterdrücktes Signal zur Übertragung zu dem fernen Konferenzteilnehmer.

8. Verfahren bei einem Audiosystem bei einem nahen Konferenzteilnehmer, wobei das Audiosystem

- ein Mehrkanal-Audiosignal von einem fernen Konferenzteilnehmer empfängt, wobei das Mehrkanal-Audiosignal eine Vielzahl N von Kanal-Audiosignalen aufweist, und zwar eines pro Kanal des Audiosystems,
- ein entsprechendes Audiosignal an N Lautsprechern präsentiert,
- ein Nah-Audiosignal mit einem oder mehreren Mikrophonen aufnimmt und
- ein entsprechendes Nah-Audiosignal zu dem fernen Konferenzteilnehmer überträgt,

wobei das Verfahren **gekennzeichnet ist durch**

- Zusammenführen des Mehrkanal-Audiosignals in ein Monosignal unter Bewahrung von räumlicher Audioinformation **durch** Filtern eines jeweiligen Kanal-Audiosignals mit einem entsprechenden Filter von einem ersten Satz von N frequenz-komplementären Filtern, um **dadurch** N gefilterte Kanal-Audiosignale zu generieren, sowie **durch** Addieren der N gefilterten Kanal-Audiosignale zum Erzeugen des Monosignals, und

- entweder Unterteilen des Monosignals **durch** Filtern des Monosignals mit jedem von einem zweiten Satz von N frequenz-komplementären Filtern mit Frequenzgängen entsprechend den Frequenzgängen der Filter des ersten Satzes von N frequenz-komplementären Filtern, um **dadurch** N Lautsprechersignale zu erzeugen, und **durch** Bereitstellen jedes Lautsprechersignals an einem entsprechenden Lautsprecher oder alternativ einfach **durch** Bereitstellen jedes gefilterten Audiokanalsignals an einem entsprechenden Lautsprecher, und

- Bereitstellen des Monosignals als Referenzsignal an einem Mono-Echounterdrücker, wobei der Mono-Echounterdrücker ein Echo-Modellsignal aus dem Monosignal generiert und das Echo-Modellsignal von dem Nah-Audiosignal subtrahiert, um **dadurch** ein echounterdrücktes Signal für die Übertragung zu dem fernen Konferenzteilnehmer zu generieren.

9. Verfahren nach Anspruch 8,
wobei es sich bei den frequenz-komplementären Filtern um Filter mit Kammfilter-Frequenzgängen handelt.

10. Verfahren nach Anspruch 8,
wobei der Schritt des Generierens eines Echo-Modellsignals aus dem Monosignal das Unterteilen des Monosignals in eine Anzahl M von Unterband-Monosignalen mittels eines ersten Analysefilters sowie das Generieren von M Unterband-Echo-Modellsignalen aus den M Unterband-Monosignalen beinhaltet, und
wobei der Schritt des Subtrahierens des Echo-Modellsignals von dem Nah-Audiosignal, um **dadurch** ein echounterdrücktes Signal zur Übertragung zu dem fernen Konferenzteilnehmer zu generieren, folgende Schritte beinhaltet:

- Unterteilen des Nah-Audiosignals in M Unterband-Nah-Audiosignale mittels eines zweiten Analysefilters, und
- Subtrahieren des jeweiligen Unterband-Echo-Modellsignals von einem entsprechenden Unterband-Nah-Audiosignal, um **dadurch** M echounterdrückte Unterband-Signale zu generieren, und
- Zusammenführen der M echounterdrückten Unterband-Signale in das echounterdrückte Signal mittels eines ersten Synthesefilters zur Übertragung zu dem fernen Konferenzteilnehmer.

11. Verfahren nach einem der Ansprüche 8 bis 10,
**dadurch gekennzeichnet,**
**daß** es sich bei dem Mehrkanal-Audiosignal um ein Stereo-Audiosignal mit einem linken (L) Kanal-Audiosignal und einem rechten (R) Kanal-Audiosignal handelt.

12. Verfahren nach Anspruch 11,
wobei ein dem linken Kanal zugeordnetes, erstes Filter der frequenz-komplementären Filter einen Frequenzgang gemäß folgender Charakteristik aufweist:

$$H_L(f) = K_c \text{ für } f \in [f_{2n}, f_{2n+1}>, \qquad \text{sonst } 0,$$

und wobei ein dem rechten Kanal zugeordnetes, zweites Filter der frequenz-komplementären Filter einen Frequenzgang gemäß folgender Charakteristik aufweist:

$$H_R(f) = K_c \text{ für } f \in [f_{2n+1}, f_{2n+2}>, \qquad \text{sonst } 0.$$

13. Verfahren bei einem Audiosystem bei einem nahen Konferenzteilnehmer, wobei das Audiosystem

- ein Stereo-Audiosignal von einem fernen Konferenzteilnehmer empfängt, wobei das Stereo-Audiosignal ein Audiosignal eines linken Kanals und ein Audiosignal eines rechten Kanals aufweist,
- ein entsprechendes Audiosignal an einem linken bzw. einem rechten Lautsprecher präsentiert,
- ein Nah-Audiosignal mit einem oder mehreren Mikrophonen aufnimmt und
- ein entsprechendes Nah-Audiosignal zu dem fernen Konferenzteilnehmer überträgt,

wobei das Verfahren **gekennzeichnet ist durch**

- Unterteilen des Audiosignals des linken Kanals mittels eines linken Analysefilters in eine Anzahl M von linken Unterband-Frequenzausgängen, die gerade und ungerade linke Unterband-Frequenzausgänge beinhalten, und Unterteilen des Audiosignals des rechten Kanals mittels eines rechten Analysefilters in M rechte Unterband-Frequenzausgänge, die gerade und ungerade rechte Untergang-Frequenzausgänge beinhalten,

- Zusammenführen der geraden linken Unterband-Frequenzausgänge mittels eines linken Synthesefilters, um **dadurch** ein zusammengeführtes Signal des linken Kanals zu generieren, und Zusammenführen der ungeraden rechten Unterband-Frequenzausgänge mittels eines rechten Synthesefilters, um **dadurch** ein zusammengeführtes Signal des rechten Kanals zu generieren, und Bereitstellen des zusammengeführten Signals des linken Kanals an dem linken Lautsprecher und des zusammengeführten Signals des rechten Kanals an dem rechten Lautsprecher, und

- Generieren von M Unterband-Monosignalen, die gerade und ungerade Unterband-Monosignale aufweisen, so daß die geraden Unterband-Monosignale die geraden linken Unterband-Frequenzausgänge bilden und die ungeraden Unterband-Monosignale die ungeraden rechten Unterband-Frequenzausgänge bilden, und

- Generieren von M Unterband-Echo-Modellsignalen aus den M Unterband-Monosignalen und Unterteilen des Nah-Audiosignals in M Unterband-Nah-Audiosignale mittels eines zweiten Analysefilters, und Subtrahieren jedes Unterband-Echo-Modellsignals von einem entsprechenden Unterband-Nah-Audiosignal, um **dadurch** M echounterdrückte Unterband-Signale zu generieren, und Zusammenführen der M echounterdrückten Unterband-Signale in ein echounterdrücktes Signal mittels eines zweiten Synthesefilters zur Übertragung zu dem fernen Konferenzteilnehmer.

### Revendications

**1.** Système audio multicanal au niveau d'une partie de conférence d'extrémité proche, ledit système audio multicanal étant configuré

➢ pour recevoir un signal audio multicanal en provenance d'une partie de conférence d'extrémité éloignée, ledit signal audio multicanal comprenant une pluralité N de signaux audio de canal, un pour chaque canal du système audio,

➢ pour présenter l'audio correspondant sur N haut-parleurs,

➢ pour capturer l'audio d'extrémité proche par un ou plusieurs microphones et pour transmettre le signal audio d'extrémité proche correspondant à la partie de conférence d'extrémité éloignée, ledit système audio étant **caractérisé par**

➢ une unité de fusionnement pour fusionner le signal audio multicanal en un signal mono préservant les informations audio spatiales en filtrant chaque signal audio de canal avec un filtre correspondant d'un premier ensemble de N filtres de fréquence complémentaires, générant ainsi N signaux audio de canal filtrés, et en ajoutant les N signaux audio de canal filtrés pour créer ledit signal mono, et

➢ une unité de pré-charge soit pour diviser ledit signal mono en filtrant ledit signal mono avec chacun d'un second ensemble de N filtres de fréquence complémentaires ayant des réponses en fréquence correspondant aux réponses en fréquence des filtres dudit premier ensemble de N filtres de fréquence complémentaires, générant ainsi N signaux de haut-parleur, et pour fournir chaque signal de haut-parleur à un haut-parleur correspondant, soit, en variante, simplement pour fournir chaque signal de canal audio filtré à un haut-parleur correspondant, et

➢ un annuleur d'écho mono comprenant des moyens pour générer un signal de modèle d'écho à partir dudit signal mono utilisé comme signal de référence et des moyens pour soustraire ledit signal de modèle d'écho du signal audio d'extrémité proche, générant ainsi un signal à écho annulé pour la transmission à la partie de conférence d'extrémité éloignée.

**2.** Système audio selon la revendication 1, dans lequel lesdits filtres de fréquence complémentaires sont des filtres avec des réponses en fréquence de filtre en peigne.

**3.** Système audio selon la revendication 1, dans lequel les moyens pour générer un signal de modèle d'écho à partir dudit signal mono utilisé comme signal de référence comprend un premier filtre d'analyse pour diviser ledit signal mono en un nombre M de signaux mono de sous-bande, et des moyens pour générer M signaux de modèle d'écho de sous-bande à partir desdits M signaux mono de sous-bande, et

➢ les moyens pour soustraire ledit signal de modèle d'écho du signal audio d'extrémité proche, générant ainsi un signal à écho annulé pour la transmission à la partie de conférence d'extrémité éloignée, comprennent

➢ un second filtre d'analyse pour diviser le signal audio d'extrémité proche en M signaux audio d'extrémité proche de sous-bande, et des moyens pour soustraire chaque signal de modèle d'écho de sous-bande d'un signal audio d'extrémité proche de sous-bande correspondant, générant ainsi M signaux à écho annulé de sous-bande, et un premier filtre de synthèse pour fusionner lesdits M signaux à écho annulé de sous-bande en ledit signal à écho annulé pour la transmission à la partie de conférence d'extrémité éloignée.

4. Système audio selon l'une des revendications 1 à 3, dans lequel ladite unité de pré-charge s'exécute simultanément avec lesdits filtres de fréquence complémentaires.

5. Système audio selon l'une des revendications précédentes, dans lequel le signal audio multicanal est un signal audio stéréo comprenant un signal audio de canal gauche (L) et un signal audio de canal droit (R).

6. Système audio selon la revendication 5, dans lequel un premier desdits filtres de fréquence complémentaires associé audit canal gauche a une réponse en fréquence selon les caractéristiques suivantes :

$$H_L(f) = K_C \text{ pour } f \in [f_{2n}, f_{2n+1}>, 0 \text{ autrement,}$$

et un second desdits filtres de fréquence complémentaires associé audit canal droit a une réponse en fréquence selon les caractéristiques suivantes :

$$H_R(f) = K_C \text{ pour } f \in [f_{2n+1}, f_{2n+2}>, 0 \text{ autrement.}$$

7. Système audio au niveau d'une partie de confé-rence d'extrémité proche, ledit système audio étant configuré
   ➢ pour recevoir un signal audio stéréo en provenance d'une partie de conférence d'extrémité éloignée, ledit signal audio stéréo comprenant un signal audio de canal gauche et un signal audio de canal droit,
   ➢ pour présenter l'audio correspondant sur un haut-parleur gauche et un haut-parleur droit respectivement,
   ➢ pour capturer l'audio d'extrémité proche par un ou plusieurs microphones, et
   ➢ pour transmettre le signal audio d'extrémité proche correspondant à la partie de conférence d'extrémité éloignée,
   ➢ ledit système audio étant **caractérisé par**
   ➢ un filtre d'analyse gauche pour diviser ledit signal audio de canal gauche en un nombre M de sorties de fréquence de sous-bande gauches comprenant des sorties de fréquence de sous-bande gauches paires et impaires, et
   ➢ un filtre d'analyse droit pour diviser ledit signal audio de canal droit en M sorties de fréquence de sous-bande droites comprenant des sorties de fréquence de sous-bande droites paires et impaires, et
   ➢ un filtre de synthèse gauche pour fusionner les sorties de fréquence de sous-bande gauches paires en un signal fusionné de canal gauche et pour fournir ledit signal fusionné de canal gauche audit haut-parleur gauche, et
   ➢ un filtre de synthèse droit pour fusionner les sorties de fréquence de sous-bande droites impaires en un signal fusionné de canal droit et pour fournir ledit signal fusionné de canal droit audit haut-parleur droit, et
   ➢ des moyens pour générer M signaux de modèle d'écho de sous-bande à partir de M signaux mono de sous-bande comprenant des signaux mono de sous-bande pairs et impairs de sorte que les signaux mono de sous-bande pairs soient les sorties de fréquence de sous-bande gauches paires et que les signaux mono de sous-bande impairs soient les sorties de fréquence de sous-bande droites impaires, et
   ➢ un second filtre d'analyse pour diviser le signal audio d'extrémité proche en M signaux audio d'extrémité proche de sous-bande, et
   ➢ des moyens pour soustraire chaque signal de modèle d'écho de sous-bande d'un signal audio d'extrémité proche de sous-bande correspondant, générant ainsi M signaux à écho annulé de sous-bande, et
   ➢ un second filtre de synthèse pour fusionner lesdits M signaux à écho annulé de sous-bande en un signal à écho annulé, pour la transmission à la partie de conférence d'extrémité éloignée.

8. Procédé dans un système audio au niveau d'une partie de conférence d'extrémité proche, ledit système audio recevant un signal audio multicanal en provenance d'une partie de conférence d'extrémité éloignée, ledit signal audio multicanal comprenant une pluralité N de signaux audio de canal, un pour chaque canal du système audio, présentant l'audio correspondant sur N haut-parleurs, capturant l'audio d'extrémité proche par un ou plusieurs microphones et transmettant le signal audio d'extrémité proche correspondant à la partie de conférence d'extrémité éloignée, ledit procédé étant **caractérisé par**
   ➢ le fusionnement du signal audio multicanal en un signal mono préservant les informations audio spatiales en filtrant chaque signal audio de canal avec un filtre correspondant d'un premier ensemble de N filtres de fréquence complémentaires, générant ainsi N signaux audio de canal filtrés, et en ajoutant les N signaux audio de canal filtrés pour créer ledit signal mono, et

➢ soit la division dudit signal mono en filtrant ledit signal mono avec chacun d'un second ensemble de N filtres de fréquence complémentaires ayant des réponses en fréquence correspondant aux réponses en fréquence des filtres dudit premier ensemble de N filtres de fréquence complémentaires, générant ainsi N signaux de haut-parleur, et en fournissant chaque signal de haut-parleur à un haut-parleur correspondant, soit, en variante, simplement la fourniture de chaque signal de canal audio filtré à un haut-parleur correspondant, et

➢ la fourniture dudit signal mono comme signal de référence à un annuleur d'écho mono, ledit annuleur d'écho mono générant un signal de modèle d'écho à partir dudit signal mono, soustrayant ledit signal de modèle d'écho du signal audio d'extrémité proche, générant ainsi un signal à écho annulé pour la transmission à la partie de conférence d'extrémité éloignée.

9. Procédé selon la revendication 8, dans lequel lesdits filtres de fréquence complémentaires sont des filtres avec des réponses en fréquence de filtre en peigne.

10. Procédé selon la revendication 8,
➢ dans lequel l'étape consistant à générer un signal de modèle d'écho à partir dudit signal mono comprend la division dudit signal mono en un nombre M de signaux mono de sous-bande au moyen d'un premier filtre d'analyse, et générer M signaux de modèle d'écho de sous-bande à partir desdits M signaux mono de sous-bande, et

➢ dans lequel l'étape consistant à soustraire ledit signal de modèle d'écho du signal audio d'extrémité proche, générant ainsi un signal à écho annulé pour la transmission à la partie de conférence d'extrémité éloignée, comprend les étapes consistant à

➢ diviser le signal audio d'extrémité proche en M signaux audio d'extrémité proche de sous-bande au moyen d'un second filtre d'analyse, et

➢ soustraire chaque signal de modèle d'écho de sous-bande d'un signal audio d'extrémité proche de sous-bande correspondant, générant ainsi M signaux à écho annulé de sous-bande, et fusionner lesdits M signaux à écho annulé de sous-bande en ledit signal à écho annulé au moyen d'un premier filtre de synthèse, pour la transmission à la partie de conférence d'extrémité éloignée.

11. Procédé selon l'une des revendications 8 à 10, **caractérisé en ce que** le signal audio multicanal est un signal audio stéréo comprenant un signal audio de canal gauche (L) et un signal audio de canal droit (R).

12. Procédé selon la revendication 11, dans lequel un premier desdits filtres de fréquence complémentaires associé audit canal gauche a une réponse en fréquence selon les caractéristiques suivantes :

$$H_L(f) = K_C \text{ pour } f \in [f_{2n}, f_{2n+1}>, 0 \text{ autrement,}$$

et un second desdits filtres de fréquence complémentaires associé audit canal droit a une réponse en fréquence selon les caractéristiques suivantes :

$$H_R(f) = K_C \text{ pour } f \in [f_{2n+1}, f_{2n+2}>, 0 \text{ autrement.}$$

13. Procédé dans un système audio au niveau d'une partie de conférence d'extrémité proche, ledit système audio recevant un signal audio stéréo en provenance d'une partie de conférence d'extrémité éloignée, ledit signal audio stéréo comprenant un signal audio de canal gauche et un signal audio de canal droit, présentant l'audio correspondant sur un haut-parleur gauche et un haut-parleur droit respectivement, capturant l'audio d'extrémité proche par un ou plusieurs microphones et transmettant le signal audio d'extrémité proche correspondant à la partie de conférence d'extrémité éloignée,
le procédé étant **caractérisé par**
➢ la division dudit signal audio de canal gauche au moyen d'un filtre d'analyse gauche en un nombre M de sorties de fréquence de sous-bande gauches comprenant des sorties de fréquence de sous-bande gauches paires et impaires, et la division dudit signal audio de canal droit au moyen d'un filtre d'analyse droit en M sorties de fréquence de sous-bande droites comprenant des sorties de fréquence de sous-bande droites paires et impaires, et

➢ le fusionnement des sorties de fréquence de sous-bande gauches paires au moyen d'un filtre de synthèse gauche, générant ainsi un signal fusionné de canal gauche, et le fusionnement des sorties de fréquence de sous-bande droites impaires au moyen d'un filtre de synthèse droit, générant ainsi un signal fusionné de canal droit, et la fourniture dudit signal fusionné de canal gauche audit haut-parleur gauche et dudit signal fusionné de canal droit audit haut-parleur droit, et

➢ la génération de M signaux mono de sous-bande comprenant des signaux mono de sous-bande pairs et impairs de sorte que les signaux mono de sous-bande pairs soient les sorties de fréquence de sous-bande gauches paires et que les signaux mono de sous-bande impairs soient les sorties de fréquence de sous-bande droites impaires, et

➢ la génération de M signaux de modèle d'écho de sous-bande à partir desdits M signaux mono de sous-bande, et la division du signal audio d'extrémité proche en M signaux audio d'extrémité proche de sous-bande au moyen d'un second filtre d'analyse, et la soustraction de chaque signal de modèle d'écho de sous-bande d'un signal audio d'extrémité proche de sous-bande correspondant, générant ainsi M signaux à écho annulé de sous-bande, et le fusionnement desdits M signaux à écho annulé de sous-bande en un signal à écho annulé au moyen d'un second filtre de synthèse, pour la transmission à la partie de conférence d'extrémité éloignée.

FIG. 1

FIG. 2

FIG. 3

FIG. 4

FROM FAR END
LEFT CHANNEL
AUDIO SIGNAL TO BE PRESENTED
ON AUDIO PRESENTING
DEVICE/SYSTEM, 4131

HcL

TO DAC/LOUDSPEAKER
LEFT CHANNEL

HDL

FROM FAR END
RIGHT CHANNEL
AUDIO SIGNAL TO BE PRESENTED
ON AUDIO PRESENTING
DEVICE/SYSTEM, 4131

HcR

+

HDR

TO DAC/LOUDSPEAKER
RIGHT CHANNEL

ANALYZE FILTER

4125

PROCESSING INSIDE BOX
IS REPEATED
FOR ALL SUBBANDS
4100

4127

TO
FAR
END

SYNTHE-
SIZE
FILTER

ACOUSTIC MODEL
UPDATE LOOP
4141

MODEL
OF ACOUSTIC
SYSTEM

4121

SUBBAND ECHO
ESTIMATE
(INVERTED)
4133

ANALYZE
FILTER

4131

FROM
ADC/
MICRO-
PHONE

4122

MISC. SUBBAND
PROCESSING

+

SUBBAND AUDIO
SIGNAL TO BE
TRANSMITTED
4135

SUBBAND
MICROPHONE
SIGNAL WITH
RESIDUAL
ECHO AND
NOISE, 4134

SUBBAND
MICROPHONE
SIGNAL WITH
ECHO AND
NOISE
4132

FIG. 5

FIG. 6

FIG. 7

FROM FAR END LEFT CHANNEL

FROM FAR END RIGHT CHANNEL

TO DAC/LOUDSPEAKER LEFT CHANNEL

TO DAC/LOUDSPEAKER RIGHT CHANNEL

HcL

HcR

AUDIO SIGNAL TO BE PRESENTED ON AUDIO PRESENTING DEVICE/SYSTEM, 4131

AUDIO SIGNAL TO BE PRESENTED ON AUDIO PRESENTING DEVICE/SYSTEM, 4131

ANALYZE FILTER — 4125

PROCESSING INSIDE BOX IS REPEATED FOR ALL SUBBANDS 4100

MODEL OF ACOUSTIC SYSTEM — 4121

ACOUSTIC MODEL UPDATE LOOP 4141

MISC. SUBBAND PROCESSING — 4122

SUBBAND ECHO ESTIMATE (INVERTED) 4133

SUBBAND MICROPHONE SIGNAL WITH ECHO AND NOISE 4132

SUBBAND MICROPHONE SIGNAL WITH RESIDUAL ECHO AND NOISE, 4134

SUBBAND AUDIO SIGNAL TO BE TRANSMITTED 4135

ANALYZE FILTER — 4131

FROM ADC/MICRO-PHONE

SYNTHE-SIZE FILTER — 4127

TO FAR END

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Jacob Benesty et al.** Stereophonic acoustic echo cancellation using nonlinear transformation and comb filtering. *Bell Laboratories, Lucent Technology*